# EUROPÄISCHE PATENTSCHRIFT

(11) **EP 2 211 247 B1**
(45) Veröffentlichungstag und Bekanntmachung des Hinweises auf die Patenterteilung: **30.04.2014**
(21) Anmeldenummer: 09015034.3
(22) Anmeldetag: 04.12.2009
(51) Int. Cl.: G05D 16/10, G05D 7/01

(54) **Druckminderer für Gase**
Pressure reducer for gases
Réducteur de pression pour gaz

(30) Priorität: 22.01.2009 DE 102009005794
(43) Veröffentlichungstag der Anmeldung: 28.07.2010
(73) Patentinhaber: VTI Ventil Technik GmbH, 58706 Menden (DE)
(72) Erfinder: Pütz, Markus, 58135 Hagen (DE); Wehowsky, Wilfried, 58706 Menden (DE)
(74) Vertreter: Griepenstroh, Jörg

(56) Entgegenhaltungen:
- WO-A1-99/47198
- WO-A1-2006/046793
- US-B1- 6 286 543

## Beschreibung

Die Erfindung betrifft einen Druckminderer für Gase.

Gasflaschen, insbesondere Sauerstoffflaschen, werden heutzutage in verschiedenen Größen nicht mehr nur in stationären medizinischen Einrichtungen, sondern auch bei medizinischer Notfallversorgung vor Ort eingesetzt.

Bei der Versorgung eines Patienten mit Sauerstoff ist es wichtig, dass einfach erkennbar ist, ob die eingestellte Durchflussmenge tatsächlich aus dem Gasbehälter zum Patienten strömt. In medizinischen Einrichtungen erfolgt diese Anzeige über einen Durchflussmengenanzeiger, bei welchem ein Schwebekörper in einer Glassäule in Abhängigkeit von der Durchflussmenge nach oben steigt. Nachteilig ist, dass ein derartiger Durchflussmengenanzeiger baubedingt anfällig gegenüber Beschädigungen ist und senkrecht montiert werden muss. Diese Bauform eignet sich daher weniger für eine Notfallversorgung vor Ort.

Aus der WO 2006/046793 A1 ist ein Druckminderer für Gase bekannt, der einen Druckregler und eine nachgeschaltete Durchflussmengensteuereinheit umfasst. Die Durchflussmengensteuereinheit ist zwischen einem Niederdruckbereich des Druckreglers und einem Abströmbereich angeordnet. Am Gehäuse der Durchflussmengensteuereinheit ist eine Anzeigeeinheit für wenigstens ein Signal angeordnet.

Über ein Stellglied der Durchflussmengensteuereinheit ist eine Lochblende zur Steuerung der Durchflussmenge betätigbar. Die Lochblende weist Austrittslöcher mit unterschiedlichen Durchmessern auf, welche mit einer Durchlassöffnung in einer im Niederdruckbereich angeordneten Dichtscheibe in Überdeckung bringbar sind, wodurch im Niederdruckbereich ein Strömungskanal freigebbar ist, welcher sich von der Durchlassöffnung bis in einen im Gehäuse der Durchflussmengensteuereinheit angeordneten Vorderbereich eines Kolbenraums erstreckt.

Hiervon ausgehend, liegt der Erfindung die Aufgabe zugrunde, einen kompakt bauenden Druckminderer mit direkt am Druckminderer dauerhaft angeordneten Durchflussmengenanzeiger für ein Signal aufzuzeigen, wobei das Signal durch einen im Druckminderer integrierten und zuverlässigen Mechanismus ausgelöst werden soll, der nicht nur anzeigt, dass ein bestimmter Gasvolumenstrom eingestellt ist, sondern auch anzeigt, dass das Gas abströmt.

Die Lösung der Aufgabe erfolgt mit einem Druckminderer gemäß den Merkmalen im Patentanspruch 1.

Vorteilhafte Ausgestaltungen sind Gegenstand der Unteransprüche 2 bis 20.

Der erfindungsgemäße Druckminderer weist einen Druckregler, eine Durchflussmengensteuereinheit sowie eine am Gehäuse des Druckminderers angeordnete Anzeigeeinheit für wenigstens ein Signal auf. Dabei vermindert der Druckregler den Flaschendruck auf einen Niederdruck, welcher im Bereich der Durchflussmengensteuereinheit anliegt. Über die Durchflussmengensteuereinheit wird der benötigte Gasvolumenstrom eingestellt.

An der Anzeigeeinheit kann ein Benutzer direkt ablesen, ob ein Gas, wie eingestellt, aus dem Gastank zum Patienten strömt. Dabei wird nicht nur angezeigt, ob ein bestimmter Gasvolumenstrom aus dem Gastank ausströmt, sondern auch, ob das Gas zum Patienten hin abströmen kann. Das Prinzip des erfindungsgemäßen Auslösens eines Signals beruht auf einer Verlagerung eines federbelasteten Differenzkolbens durch Beaufschlagung mit unterschiedlichem Druck.

Der Druckminderer unterteilt sich in drei Druckbereiche, den Flaschendruckbereich, den Niederdruckbereich und den Abströmbereich. Da zur Erläuterung des Erfindungsgedankens nur der Niederdruckbereich und der Abströmbereich notwendig sind, wird hier nicht näher auf die Druckminderung vom Flaschendruckbereich in den Niederdruckbereich mittels des Druckreglers eingegangen. Der Druck im Niederdruckbereich und der im Abströmbereich henschende Druck wirken auf einen Differenzkolben, welcher in einem Kolbenraum im Druckminderer angeordnet ist. Über umfangsseitig des Differenzkolbens angeordnete Dichtungen wird dieser Kolbenraum in wenigstens einen Vorderbereich und einen Hinterbereich unterteilt. Der Vorderbereich ist mit dem Niederdruckbereich und der Hinterbereich ist mit dem Abströmbereich fluidleitend verbunden.

Die Dichtung zwischen Vorder- und Hinterbereich verhindert einen Druckausgleich innerhalb des Kolbenraums, sodass beide Drücke einander entgegengerichtet am Differenzkolben angreifen. Ist der Druck des Vorderbereichs größer als der Druck des Hinterbereiches, wird der Differenzkolben aus einer Ausgangsposition entlang seiner Längsachse in Richtung des Hinterbereichs verlagert. Diese Verlagerung führt dann zum Auslösen eines Signals, beispielsweise durch Schließen eines Kontaktes einer elektrischen oder mechanischen Schaltung einer Anzeigeeinheit.

Während einer Gasentnahme ist im Normalfall der Druck im Hinterbereich kleiner als der Druck im Vorderbereich. Das Gas strömt kontinuierlich aus dem Abströmbereich ab, während im Vorderbereich konstant der im Niederdruckbereich herrschende Druck anliegt. Wird das Abströmen des Gases außerhalb des Druckminderers unterbrochen, beispielsweise durch eine Verstopfung oder ein Abknicken eines angeschlossenen Schlauchs, strömt das Gas solange aus dem Niederdruckbereich in den Abströmbereich, bis ein Druckausgleich erfolgt. Dies ist jedoch für einen Patienten ein kritischer Zustand, welcher sofort angezeigt werden muss.

Um sicherzustellen, dass der Differenzkolben in die Ausgangsposition zurückgelangt, sobald der Druck im Hinterbereich genauso groß ist wie der Druck im Vorderbereich, ist im Abströmbereich des Kolbenraumes ein Federelement vorgesehen. Dieses bewirkt eine Verlagerung des Differenzkolbens, wenn das Gas aus dem Abströmbereich nicht abströmen kann. Dadurch wird der Kontakt unterbrochen und das Signal, welches das Abströmen des Gases anzeigt, erlischt oder wird durch ein Warnsignal ersetzt.

Die Anzeige kann dabei optisch erfolgen, beispielsweise durch eine Diode, welche grünes Licht zeigt, sobald ein Gas strömt, und welches aus ist, sobald der Gasstrom entweder abgeschaltet oder anderweitig unterbrochen wurde. Ebenso kann das grüne Licht bei einer Unterbrechung der Gasströmung durch ein anderes Signal, beispielsweise ein anderes Licht oder ein Tonsignal, ersetzt werden. Auch eine haptische Anzeige ist möglich. Weiterhin besteht die Möglichkeit, zwei oder mehrere Signale in Kombination anzeigen zu lassen, oder eine andere elektronische Steuer- oder Kontrolleinheit anzusteuern.

Die Anzeigeeinheit ist hier in den Druckminderer integriert, so dass das Signal dabei direkt am Druckminderer angezeigt wird. Die Anzeige erfolgt lageunabhängig und der Einsatz einer zusätzlichen Einheit zur Strömungsüberwachung zwischen Druckminderer und Patient ist nicht mehr notwendig. Dadurch wird Zeit gespart und Helfer oder Arzt können sich auf den Patienten konzentrieren.

Die Energieversorgung der Anzeigeeinheit wird über eine Batterie sichergestellt. Diese kann beispielsweise bei jedem neuen Befüllen des Gasbehälters ausgetauscht werden oder macht durch ein eindeutiges Signal, beispielsweise einem stetigen Blinken einer Leuchte, deutlich, dass ein Austausch notwendig ist.

Eine genaue Beschreibung von Aufbau und Funktionsweise des erfindungsgemäßen Druckminderers erfolgt anhand eines in den nachfolgenden Figuren beschriebenen Ausführungsbeispiels. Es zeigen:
- Figur 1: einen schematischen Querschnitt eines Druckminderers,
- Figur 2: eine schematische Einzeldarstellung von Spindel und Lochscheibe aus Figur 1,
- Figur 3: einen schematischen Verlauf des Strömungskanals,
- Figuren 4 bis 6: eine schematische Darstellung der Funktionsweise des Druckminderers.
- Figur 7: eine Gesamtdarstellung eines Druckminderers und
- Figur 8: einen Querschnitt von Figur 7.

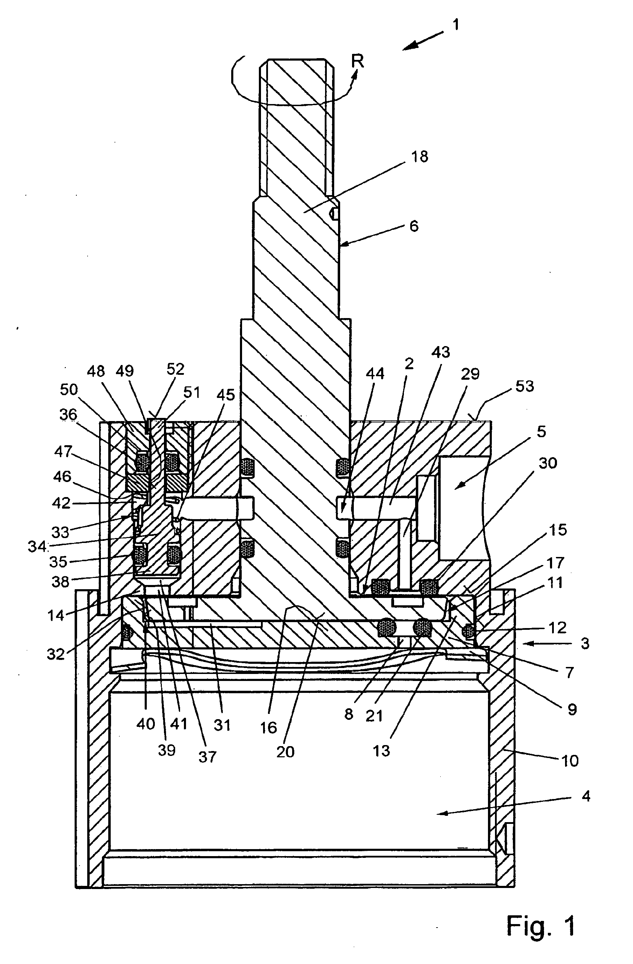

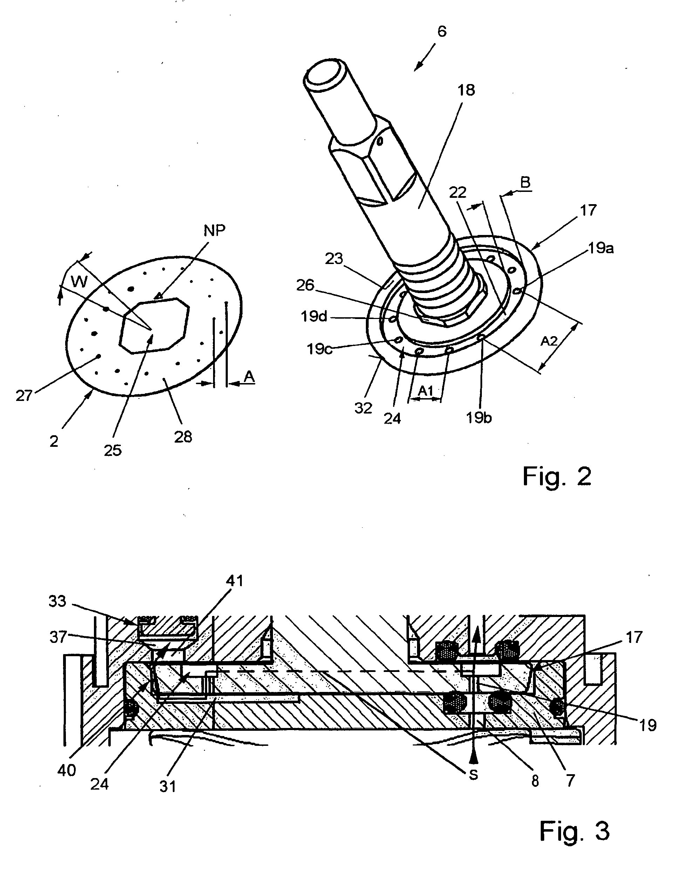

Figur 1 zeigt einen schematischen Querschnitt eines Druckminderers 1. Der Druckminderer 1 wird durch eine Lochblende 2 der Durchflussmengensteuereinheit 3 in zwei Druckbereiche, einen Niederdruckbereich 4 und einen Abströmbereich 5, unterteilt, wobei die Lochblende 2 durch ein Stellglied 6 betätigbar ist. Stellglied 6 und Lochblende 2 sind in Figur 2 einzeln dargestellt. Im Niederdruckbereich 4 ist eine Dichtscheibe 7 mit einer Durchlassöffnung 8 angeordnet. Diese Dichtscheibe 7 wird durch einen Wellenfederring 9 gegenüber dem Gehäuse 10 abgestützt. Über eine entlang der Umfangsseite 11 der Dichtscheibe 7 angeordnete Dichtung 12 wird sichergestellt, dass das Gas nur durch die Durchlassöffnung 8 strömt und die Dichtscheibe 7 nicht seitlich passieren kann. Umfangsseitig der Dichtscheibe 7 ist ein umlaufender, in Richtung des Abströmbereichs 5 weisender, Kragen 13 angeordnet. Über eine an einem Gehäusevorsprung 14 anliegende Stirnseite 15 des Kragens 13 wird die Dichtscheibe 7 gegen den Wellenfederring 9 abgestützt.

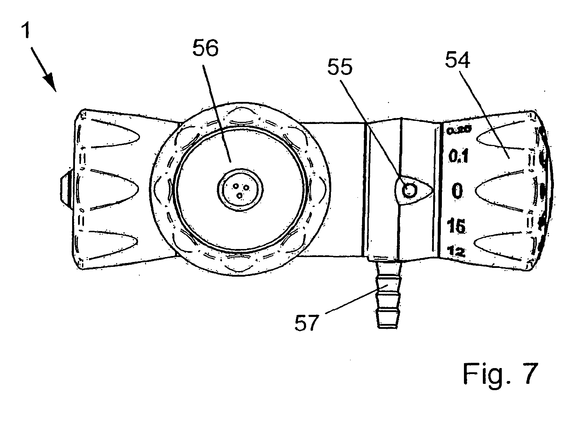

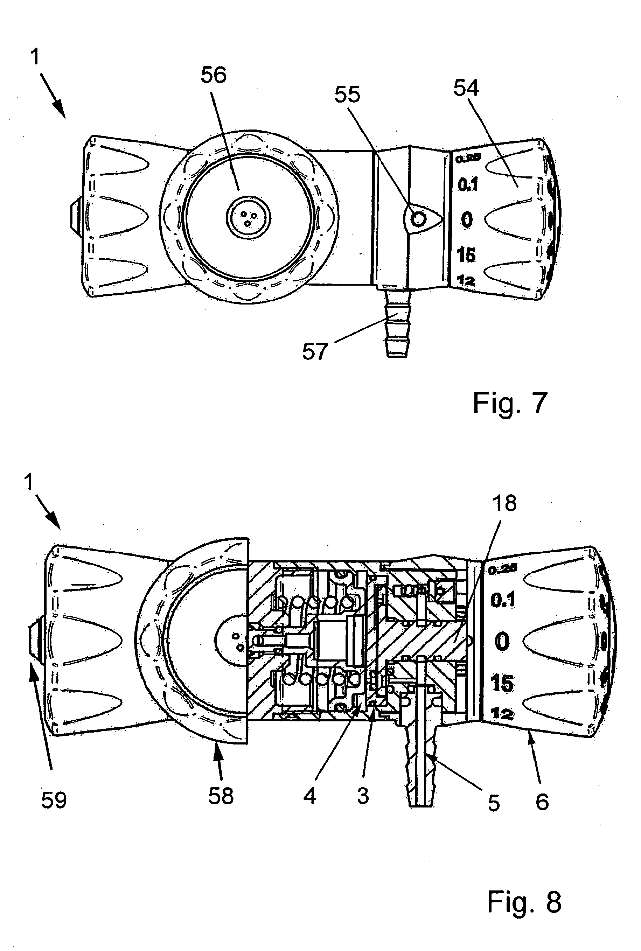

Weiterhin grenzt an die zum Abströmbereich 5 weisende Seitenfläche 16 der Dichtscheibe 7 eine Lochscheibe 17. Dabei sitzt die Lochscheibe 17 in einer durch den Kragen 13 gebildeten Vertiefung. Die Lochscheibe 17 gehört zu einer aus dem Gehäuse 10 herausragenden Spindel 18 und bildet ein Ende dieser Spindel 18. Dabei ist der Durchmesser der Spindel 18 in allen Längsachsenabschnitten kleiner als der Durchmesser der Lochscheibe 17. Spindel 18 und Lochscheibe 17 sind zueinander konzentrisch ausgerichtet. Die Lochscheibe 17 ist mit Löchern 19 gleichen Durchmessers versehen. Lochscheibe 17 und Spindel 18 sind mit einem in Fig. 7 dargestellten Handrad 55 betätigbar, das mit einer Skala zum Einstellen der Durchflussmenge versehen ist.

Die Löcher 19 sind ringförmig, in einem konstanten Radius auf der Lochscheibe 17 angeordnet. Dabei ist der Radius so gewählt, dass die Löcher 19 bei einer durch Betätigung der Spindel 18 ausgelösten Rotationsbewegung R nacheinander mit der Durchlassöffnung 8 der Dichtscheibe 7 in Deckung gebracht werden können. Dabei ist der Bereich um die Durchlassöffnung 8 gegenüber der zur Dichtscheibe 7 weisenden Fläche 20 der Lochscheibe 17 mit einer Dichtung 21 abgedichtet, sodass das Gas an dieser Stelle nicht zwischen Lochscheibe 17 und Dichtscheibe 7 entweichen kann. Dadurch wird erreicht, dass das Gas im Fall der Überdeckung von der Durchlassöffnung 8 mit einem Loch 19 vollständig durch das Loch 19 strömt. Wenn keine Überdeckung vorliegt, wenn also ein lochfreier Bereich 22 der Durchlassöffnung 8 gegenüberliegt, kann kein Gas vom Niederdruckbereich 4 in den Abströmbereich 5 strömen. Der Abstand A2 der Löcher 19a, 19b, welche den lachfreien Bereich 22 begrenzen, ist im Vergleich zum jeweiligen Abstand A1 der übrigen Löcher 19 etwa doppelt so groß.

Auf der spindelseitig angeordneten Seitenfläche 23 (Figur 2) der Lochscheibe 17 ist eine ringförmig verlaufende Nut 24 angeordnet. Die Nut 24 ist derart auf der Seitenfläche 23 angeordnet, dass alle Löcher 19 der Lochscheibe 17 in die Nut 24 münden.

Spindelseitig der Lochscheibe 17 ist ferner eine Lochblende 2 angeordnet. Die Lochblende 2 ist dabei verdrehfest mit der Spindel 18 verbunden. Hierzu weist die Lochblende 2 in ihrer Mitte eine Öffnung 25 auf, deren Kontur der Geometrie eines umfangsseitig der Spindel 18 angeordneten Vorsprungs 26 entspricht. In der hier abgebildeten Ausführungsform ist der Vorsprung 26 als Vierkant mit angefasten Ecken ausgebildet. Durch ein Fügen der Öffnung 25 auf den Vorsprung 26 wird eine möglichst spielfreie Mitnahme der Lochblende 2 beim Betätigen des Stellgliedes 6 ermöglicht. Weiterhin weist die Lochblende 2 etwa den gleichen Durchmesser auf, wie die Lochscheibe 17. Die Lochblende 2 weist ringförmig angeordnete Austrittslöcher 27 unterschiedlichen Durchmessers auf. Der Durchmesser bestimmt hierbei das ausströmende Gasvolumen. Die Anordnung der Austrittslöcher 27 erfolgt derart, dass sie mit den Löchern 19 der Lochscheibe 17 in Deckung liegen. Dabei ist die Lochblende 2 derart auf der Lochscheibe 17 angeordnet, dass sich eine Nullstellung NP ohne Austrittsöffnung 27, bei der kein Gas aus dem Niederdruckbereich 4 in den Abströmbereich 5 strömen kann, mittig über dem lochfreien Bereich 22 der Lochscheibe 17 befindet.

Neben den Austrittslöchern 27 weist die Lochblende 2 Entlüftungsbohrungen 28 auf. Diese sind in regelmäßigen Abständen zu den Austrittslöchem 27 radial nach innen und/oder außen versetzt und um einen Winkel W in Umfangsrichtung gegenüber den Austrittlöchem 27 verdreht angeordnet. Dabei sind die Entlüftungsbohrungen 28 derart gegenüber den Austrittslöchern 27 versetzt, dass beim Einstellen eines bestimmten Gasvolumens, das Gas nur über die Durchlassöffnung 8, ein Loch 19 und eine Austrittsöffnung 27 in den Abströmbereich 5 strömt. Hierfür ist ein konzentrisch zur Durchlassöffnung 8 angeordneter Auslasskanal 29 gegenüber der Lochblende 2 über eine Dichtung 30 abgedichtet. Die Dichtung 30 dichtet gleichzeitig die um eine Austrittsöffnung 27 liegenden Entlüftungsbohrungen 28 gegenüber einem vor dem Auslasskanal 30 liegendem Austrittloch 27 ab. Die Nut 24 der Lochscheibe 17 weist eine Breite B auf, welche wenigstens dem radialen Abstand A zwischen Austrittsloch 27 und Entlüftungsbohrung 28 entspricht. Dadurch befinden sich auch die Entlüftungsbohrungen 28 mit der Nut 24 in Deckung. Auch in der Nullstellung NP ist mindestens eine Entlüftungsbohrung 28 vorgesehen.

Auf der zur Lochscheibe 17 weisenden Seitenfläche 16 weist die Dichtscheibe 7 eine Aussparung 31 auf. In diesem Ausführungsbeispiel liegt die Aussparung 31 diametral zur Durchlassöffnung 8. Die Aussparung 31 ist groß genug, um mit mindestens zwei Löchern 19 der Lochscheibe 17 gleichzeitig in Deckung gebracht werden zu können.

Die Aussparung 31 ragt hierbei bereichsweise über eine Umfangsseite 32 der Lochscheibe 17 hinaus. Dadurch besteht ein fluidleitender Durchgang von der Aussparung 31 in einen spindelseitig der Lochblende 2 angeordneten Kolbenraum 33.

In diesem Kolbenraum 33 ist ein Differenzkolben 34 angeordnet. Dieser weist umfangseitig und in Längsrichtung versetzt angeordnete Dichtungen 35, 36 auf. Diese Dichtungen 35, 36 unterteilen den Kolbenraum 33 in drei Bereiche. In einem Vorderbereich 37 hiervon ist ein Ende 38 des Differenzkolbens 34 angeordnet. Der Vorderbereich 37 ist über einen Strömungskanal S mit dem Niederdruckbereich 4 verbunden. Dabei setzt sich der Strömungskanal S in einer Strömungsrichtung aus folgenden Abschnitten zusammen (Figur 3):
- der Durchlassöffnung 8 der Dichtscheibe 7,
- ein in Deckung mit der Durchlassöffnung 8 angeordnetes Loch 19 der Lochscheibe 17,
- der Nut 24,
- zwei dem Loch 19b gegenüberliegend angeordnete Löcher 19c, 19d,
- der Aussparung 31 in der Dichtscheibe 7,
- einem fluidleitenden Durchgang in Form eines sich an die Aussparung 31 anschließenden Spaltes 40 zwischen der Umfangsseite 32 der Lochscheibe 17 und der Innenfläche 39 des Kragens 13 der Dichtscheibe 7 und
- einer zum Vorderbereich 37 des Kolbenraums 33 führenden Durchgangsöffnung 41.

Zwischen den Dichtungen 35, 36 ist ein Hinterbereich 42 angeordnet. In diesen Hinterbereich 42 mündet ein Kontrollkanal 43, welcher vom Auslasskanal 29 abzweigt. Der Kontrollkanal 43 verläuft hierbei bereichsweise in einer, umfangsseitig der Spindel 18 ringförmig verlaufenden Nut 44. Der Differenzkolben 34 weist im zweiten Bereich 42 einen sich verringernden Durchmesser zur Anordnung eines Federelements 45 auf.

In dieser Ausführung ist das Federelement 45 eine Druckfeder. Dabei weist der Differenzkolben 34, welcher sich im ersten Drittel des Hinterbereichs 42 verjüngt, im verjüngenden Bereich eine Federanlagefläche 46 auf. Gegenüberliegend dieser Federanlagefläche 46 ist eine Scheibe 47 zur Abstützung des Federelements 45 vorgesehen. Die Scheibe 47 wird durch eine Verschlussschraube 48 mit integrierter Führung für den Differenzkolben 34 fixiert. Die zweite Dichtung 36 ist innerhalb der Führung angeordnet. Die zweite Dichtung 36 sorgt dafür, dass das Gas, welches aus dem Kontrollkanal 43 In den zweiten Bereich 42 strömt, nicht in die äußere Umgebung 50 entweichen kann. Prinzipiell kann diese Dichtung auch außerhalb des Gehäuses angeordnet sein, wichtig ist dabei nur, dass der Druck im Hinterbereich 42 gegenüber dem außerhalb herrschenden Umgebungsdruck abgedichtet ist. Weiterhin weist die Scheibe 47 eine Durchgangsöffnung 49 für den Differenzkolben 34 auf, welcher sich im zweiten Drittel des Hinterbereichs 42 weiter verjüngt.

Das verjüngte Ende 51 des Differenzkolbens 34 wird hinter der Dichtung 36 über eine Führung aus dem Gehäuse 10 herausgeführt.

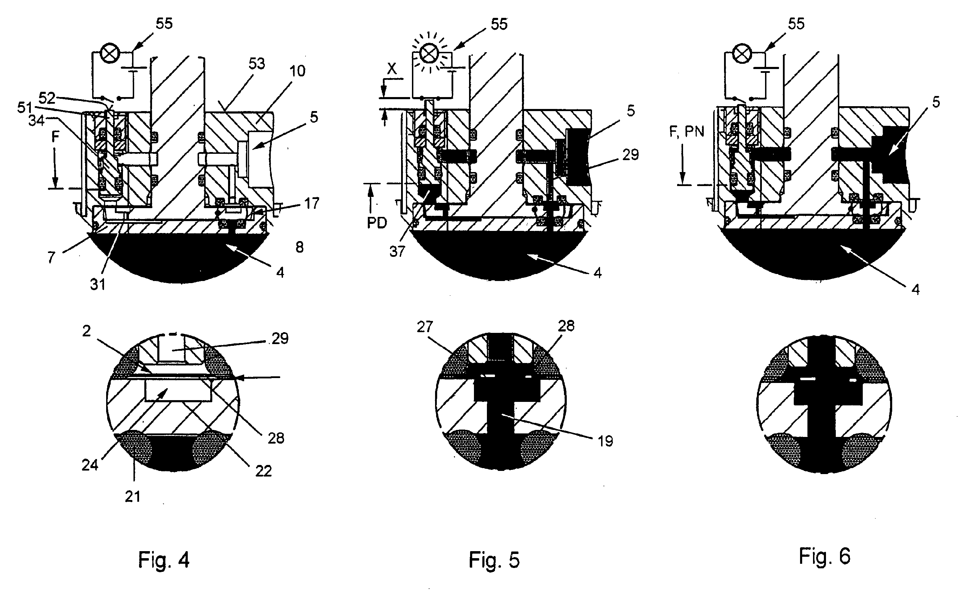

Die Figuren 4 bis 6 zeigen schematisch die Funktionsweise des Druckminderers 1. Die Bezugszeichen dieser Figuren sind analog zu denjenigen in den Figuren 1 bis 3 gewählt.

Die Figur 4 zeigt einen Ausschnitt des Druckminderers 1 in geschlossenem Zustand, in welchem kein Gas aus dem Niederdruckbereich 4 in den Abströmbereich 5 strömt. Hierbei befindet sich der lochfreie Bereich 22 über der Durchlassöffnung 8 In der Dichtscheibe 7. Für zusätzliche Dichtigkeit sorgt eine, zwischen der Dichtscheibe 7 und der Lochscheibe 17 angeordnete Dichtung 21. Im Abströmbereich 5 und im Kolbenraum 33 herrscht etwa Umgebungsdruck. Über das Federelement 45 wirkt eine Federkraft F auf den Differenzkolben 34 und bewegt diesen in eine Ausgangsposition. Der Angriffspunkt der Federkraft F ist hier durch eine gestrichelte Linie verlängert dargestellt. Ein aus dem Kolbenraum 33 ragendes Ende 51 des Differenzkolbens 34 schließt mit seiner Stirnseite 52 in etwa bündig mit einer Außenfläche 53 des Gehäuses 10 ab. Eine gegenüber dem Ende 51 des Differenzkolbens 34 angeordnete Anzeigeeinheit 55, hier als einfacher Schaltkreis mit einem Schalter und einer Leuchte dargestellt, ist nicht aktiviert.

Durch Betätigung des Stellgliedes 6 kann ein bestimmter Gasvolumenstrom vom Niederdruckbereich 4 in den Abströmbereich 5 eingestellt werden. Der gewünschte Gasvolumenstrom wird durch Verdrehen R des Stellgliedes 6 mittels des Handgriffes eingestellt, indem Lochscheibe 17 und Lochblende 2 solange gedreht werden, bis das dem gewünschten Gasvolumenstrom entsprechende Austrittsloch 27 mit dem Loch 19a der Lochscheibe 17 zur Durchlassöffnung 8 fluchtend angeordnet ist.

Das Gas strömt dann durch Loch 19 und Austrittsloch 27 in den Auslasskanal 29 des Abströmbereichs 5. Gleichzeitig baut sich hinter der Lochblende 2 ein dem Druck im Niederdruckbereich entsprechender Druck PD auf. Das Gas, welches nicht durch die Lochblende 2 in den Auslasskanal 29 strömt, folgt dem Strömungskanal S und strömt hinter der Lochblende 2 durch die Nut 24 in der Lochscheibe 17 und weiter durch die Löcher 19, welche sich mit der Aussparung 31 der Dichtscheibe 7 in Deckung befinden, in selbige ein. Von der Aussparung 31 ausgehend strömt das Gas dann durch den Spalt 40 in den Vorderbereich 37 des Kolbenraums 33. Nach vollständigem Druckausgleich herrscht im Vorderbereich 37 ein dem Niederdruckbereich 4 entsprechender Druck. Dieser Druck PD wirkt auf eine Stirnfläche 54 des Differenzkolbens 34 und dadurch der Federkraft F entgegen. Der Druckangriffspunkt ist hierbei über eine gestrichelte Linie gekennzeichnet.

Das Federelement 45 ist derart dimensioniert, dass der Differenzkolben 34 durch den anliegenden Druck PD entgegen der Federkraft F verlagert werden kann. Das Federelement 45, hier in Form einer Druckfeder, wird dabei vorgespannt. Hierbei wird das Ende 51 des Differenzkolbens 34 über die Außenfläche 53 des Gehäuses 10 hinausgeschoben. Im Austrittsbereich des Endes 51 des Differenzkolbens 34 befindet sich eine elektronische elektromechanische oder mechanische Anzeigeeinheit 55, über welche ein Signal erzeugt wird. Die Anzeigeeinheit 55 ist hier als vereinfachter, schematischer Stromkreis mit einem Schalter und einer Leuchte dargestellt. Durch den Abstand X, den der Differenzkolben 34 beim Austritt aus dem Gehäuse 10 überbrückt, kann beispielsweise ein in entsprechendem Abstand X angeordneter elektrischer oder mechanischer Schalter der Anzeigeeinheit 55 ausgelöst werden. Ein daraus erzeugtes Signal, hier eine aktivierte Leuchte, zeigt dann an, das Gas aus dem Niederdruckbereich 4 in den Abströmbereich 5 strömt und von diesem zum Nutzer oder Patienten abströmt.

Über einen vom Auslasskanal 29 abzweigenden Kontrollkanal 43 ist der zweite Bereich 42 des Kolbenraums 33 mit dem Abströmbereich 5 gekoppelt und weist somit den gleichen Innendruck PN auf, wie der Abströmbereich 5. Wenn das Gas ungehindert, beispielsweise zu einem Patienten, strömen kann, sind der im Abströmbereich 5 anliegende Druck PN und die rückstellende Federkraft F zu gering, um den Differenzkolben 34 entgegen des Druckes PD des Niederdruckbereichs 4 zu verlagern. Somit bleibt der durch das Ende 51 des Differenzkolbens 34 geschlossene Kontakt K bestehen, das Signal zeigt einen Durchfluss an (Figur 5).

Wird nun das Gas, beispielsweise durch eine Verstopfung oder einen Knick im Schlauch am Abströmen gehindert, steigt der Druck PN im Abströmbereich 5 auf den Druck PD im Niederdruckbereich 4 an (Figur 6). Dabei ändert sich auch der Druck PN im Hinterbereich 42 des Kolbenraums 33 solange, bis Druckausgleich herrscht und beide Drücke gleich groß sind (PN=PD). Da nun im Vorder- und Hinterbereich 37, 42 des Kolbenraumes 33 zwar der gleiche Druck (PN=PD) herrscht, zusätzlich zum Druck PN im zweiten Bereich 42 aber noch die Federkraft F des vorgespannten Federelements 45 wirkt, wird der Differenzkolben 34 zurück in die Ausgangsposition bewegt und der Schalter der Anzeigeeinheit 55 ist wieder geöffnet. Das Signal erlischt oder wird durch ein anderes ersetzt, woran sofort erkennbar ist, dass kein Gas mehr abströmt.

Wird der Druckminderer 1 über das Handrad zugedreht, werden Nullstellung NP und lochfreier Bereich 22 über der Durchlassöffnung 8 positioniert. Dadurch ist die Durchlassöffnung 8 gesperrt und es strömt kein weiteres Gas aus dem Niederdruckbereich 4 in den Abströmbereich 5. Der noch im ersten Bereich 37 anliegende Druck PD wird allmählich durch einen Druckausgleich gegenüber dem nun im Abströmbereich 5 herrschenden Druck PN abgebaut. Dabei strömt das Gas aus der Durchgangsöffnung 41 über den Spalt 40 in die Aussparung 31, durch die Löcher 19 in die Rinne 24 und gelangt schließlich über die Entlüftungsbohrung in der Nullstellung NP in den Auslasskanal 29. Sobald der im ersten Bereich 37 wirkende Druck PD auf den Differenzkolben 34 geringer wird als die in entgegengesetzter Richtung auf den Differenzkolben 34 wirkende Federkraft F, wird der Differenzkolben 34 wieder in seine Ausgangsposition bewegt und der Schalter der Anzeigeeinheit 55 ist geöffnet.

Figur 7 zeigt eine Gesamtdarstellung eines Druckminderers 1 von außen. Dabei ist neben einem Handgriff 54 eine Anzeigeeinheit 55, hier in Form einer Leuchte, angeordnet. Der Handgriff 54 weist eine Skala zum Einstellen des Gasvolumenstroms auf. Über eine Druckanzeige 56 ist der anliegende Flaschendruck ablesbar. Über einen Anschluss 57 kann das Gas aus dem Abströmbereich in einen Schlauch und letztendlich zum Patienten abströmen.

Figur 8 zeigt einen Druckminderer 1 mit einem Druckregler 58, über welchen ein Druck im Flaschendruckbereich 59 auf einen im Niederdruckbereich 4 anliegenden Druck verringert wird. Über eine Durchflussmengensteuereinheit 3 wird der in den Abströmbereich 5 strömende Gasvolumenstrom eingestellt. Der Handgriff 54 zum Einstellen des Gasvolumenstroms ist mit der Spindel 18 des Stellgliedes 6 fest verbunden.

Die Energieversorgung der Anzeigeeinheit kann beispielsweise über eine Batterie oder einen wieder aufladbaren Akkumulator erfolgen, wodurch ein netzunabhängiger, mobiler Einsatz möglich ist. Diese kann beim jeweils erneuten Befüllen des Gasbehälters ausgewechselt werden. Möglich sind auch eine gesonderte Anzeige oder gesonderte Warnsignale, wenn ein Batteriewechsel erfolgen muss.

Der besondere Vorteil dieser Erfindung liegt darin, dass durch den Differenzkolben nicht nur sichergestellt werden kann, dass ein bestimmter Gasvolumenstrom eingestellt ist, sondern, dass ebenfalls detektiert werden kann, ob der eingestellte Volumenstrom aus dem Abströmbereich durch den Schlauch abströmt. Aufgrund der kompakten Bauweise kann die Erfindung in den Druckminderer integriert werden. Die Konstruktion ist einfach und robust und weist daher eine viel geringere Störanfälligkeit auf, als beispielsweise das eingangs genannte Glasröhrchen, was sich positiv auf die Zuverlässigkeit auswirkt, welche vor allem im nicht klinischen Umfeld sehr wichtig ist. Da die Detektion und somit die Anzeige mit Einstellen eines bestimmten Gasvolumenstromes einsetzt, ist auch die Handhabung denkbar einfach, wodurch sich auch die Bediensicherheit erhöht.

### Bezugszeichen:

- 1 -: Druckminderer
- 2 -: Lochblende
- 3 -: Durchflussmengensteuereinheit
- 4 -: Niederdruckbereich
- 5 -: Abströmbereich
- 6 -: Stellglied
- 7 -: Dichtscheibe
- 8 -: Durchlassöffnung
- 9 -: Wellenfederring
- 10 -: Gehäuse
- 11 -: Umfangsseite v. 7
- 12 -: Dichtung
- 13 -: Kragen v. 7
- 14 -: Gehäusevorsprung
- 15 -: Stirnseite v. 7
- 18 -: Seitenfläche v. 7
- 17 -: Lochscheibe
- 18 -: Spindel
- 19 -: Loch
19a - Loch
19b - Loch
19c - Loch
19d - Loch
- 20 -: Fläche v. 17
- 21 -: Dichtung
- 22 -: lochfreier Bereich v. 17
- 23 -: Seitenfläche v. 17
- 24 -: Nut v. 17
- 25 -: Öffnung v. 2
- 26 -: Vorsprung v. 18
- 27 -: Austrittslöcher v. 2
- 28 -: Entlüftungsbohrungen v. 2
- 29 -: Auslasskanal
- 30 -: Dichtung
- 31 -: Aussparung v. 7
- 32 -: Umfangsseite v. 17
- 33 -: Kolbenraum
- 34 -: Differenzkolben
- 35 -: Dichtung
- 36 -: Dichtung
- 37 -: Vorderbereich v. 33
- 38 -: Ende v. 34
- 39 -: Innenfläche v. 7
- 40 -: Spalt
- 41 -: Durchgangsöffnung
- 42 -: Hinterbereich v. 33
- 43 -: Kontrollkanal
- 44 -: Nut
- 45 -: Federelement
- 46 -: Federanlagefläche
- 47 -: Scheibe
- 48 -: Verschlussschraube
- 49 -: Durchgangsöffnung v. 47
- 50 -: dritter Bereich v. 33
- 51 -: Ende v. 34
- 52 -: Stirnseite v. 34
- 53 -: Außenfläche v. 10
- 54 -: Handgriff
- 55 -: Anzeigeeinheit
- 56 -: Druckanzeige
- 57 -: Anschluss
- 58 -: Druckregler
- 59 -: Flaschendruckbereich

- F -: Federkraft
- PD -: Druck v. 4
- PN -: Druck v. 5
- R -: Rotationsbewegung
- S -: Strömungskanal
- X -: Abstand

## Patentansprüche

1. Druckminderer für Gase umfassend einen Druckregler (58) und eine nachgeschaltete Durchflussmengensteuereinheit (3), wobei die Durchflussmengensteuereinheit (3) zwischen einem Niederdruckbereich (4) des Druckreglers (58) und einem Abströmbereich (5) angeordnet ist, mit folgenden Merkmalen:
a) am Gehäuse (10) der Durchflussmengensteuereinheit (3) ist eine Anzeigeeinheit (55) für wenigstens ein Signal angeordnet;
b) über ein Stellglied (6) der Durchflussmengensteuereinheit (3) ist eine Lochblende (2) zur Steuerung der Durchflussmenge betätigbar;
c) die Lochblende (2) weist Austrittslöcher (27) mit unterschiedlichen Durchmessern auf, welche mit einer Durchlassöffnung (8) in einer im Niederdruckbereich (4) angeordneten Dichtscheibe (7) in Überdeckung bringbar sind, wodurch im Niederdruckbereich (4) ein Strömungskanal (S) freigebbar ist, welcher sich von der Durchlassöffnung (8) bis in einen im Gehäuse (10) der Durchflussmengensteuereinheit (3) angeordneten Vorderbereich eines Kolbenraums (33) erstreckt:
und **gekennzeichnet durch** folgende Merkmale:
d) in dem Kolbenraum (33) ist ein Differenzkolben (34) angeordnet;
e) der Differenzkolben (34) trennt den Vorderbereich (37) druckdicht von einem Hinterbereich (42) des Kolbenraums (33);
f) der Hinterbereich (42) ist über einen Kontrollkanal (43) mit dem Abströmbereich (5) verbunden;
g) eine Federkraft (F) wirkt in Richtung des Vorderbereichs (37) auf den Differenzkolben (34);
h) und wobei **durch** Verlagerung des Differenzkolbens (34) entgegen der Federkraft (F) ein Signal auslösbar ist.

2. Druckminderer nach Anspruch 1, **dadurch gekennzeichnet, dass** das ausgelöste Signal ein optisches und/oder ein haptisches und/oder ein akustisches Signal ist und/oder ein elektrisches Signal für weitere Steuer- / Kontrollfunktionen bereitgestellt wird.

3. Druckminderer nach Anspruch 1 oder 2, **dadurch gekennzeichnet, dass** das Stellglied (6) einen Handgriff (54) und eine über den Handgriff (54) betätigbare Spindel (18) aufweist.

4. Druckminderer nach einem der Ansprüche 1 bis 3, **dadurch gekennzeichnet, dass** an einem dem Handgriff (54) gegenüberliegenden Ende der Spindel (18) eine Lochscheibe (17) angeordnet ist.

5. Druckminderer nach Anspruch 4, **dadurch gekennzeichnet, dass** die Lochblende (2) spindelseitig der Lochscheibe (17) angeordnet ist.

6. Druckminderer nach einem der Ansprüche 1 bis 5, **dadurch gekennzeichnet, dass** die Austrittslöcher (27) der Lochblende (2) mit den Löchern (19) der Lochscheibe (17) zueinander konzentrisch angeordnet sind.

7. Druckminderer nach einem der Ansprüche 1 bis 6, **dadurch gekennzeichnet, dass** die Lochblende (2) zu den Austrittslöchern (27) in Umfangsrichtung um einen Winkel (W) versetzte, ringförmig angeordnete Entlüftungsbohrungen (28) aufweist.

8. Druckminderer nach einem der Ansprüche 1 bis 7, **dadurch gekennzeichnet, dass** die Entlüftungsbohrungen (28) von den Austrittslöchern (27) aus radial nach innen und/oder radial nach außen versetzt angeordnet sind.

9. Druckminderer nach einem der Ansprüche 1 bis 8, **dadurch gekennzeichnet, dass** die Lochscheibe (17) auf einer zur Lochblende (2) weisenden Seitenfläche (23) eine umlaufende Nut (24) aufweist.

10. Druckminderer nach Anspruch 9, **dadurch gekennzeichnet, dass** die Löcher (19) der Lochscheibe (17) in die Nut (24) münden.

11. Druckminderer nach einem der Ansprüche 1 bis 10, **dadurch gekennzeichnet, dass** die Nut (24) wenigstens so breit ist wie der radiale Abstand zwischen den inneren oder äußeren Entlüftungsbohrungen (28) und den Austrittslöchem (27).

12. Druckminderer nach einem der Ansprüche 1 bis 11, **dadurch gekennzeichnet, dass** die Dichtscheibe (7) an einer in Richtung des Kolbenraumes (33) weisenden Seitenfläche (16) eine Aussparung (31) aufweist, wobei die Aussparung (31) wenigstens mit zwei Löchern (19) der Lochscheibe (17) in Deckung bringbar ist und wobei die Aussparung (31) bereichsweise über die Umfangsseite (32) der Lochscheibe (17) hinausragt, wobei zwischen dem Bereich der Aussparung (31) und dem Vorderbereich (37) des Kolbenraumes (33) ein fluidleitender Durchgang besteht.

13. Druckminderer nach einem der Ansprüche 1 bis 12, **dadurch gekennzeichnet, dass** der fluidleitende Durchgang ein Bestandteil des Strömungskanals (S) ist.

14. Druckminderer nach einem der Ansprüche 1 bis 13, **dadurch gekennzeichnet, dass** abstromseitig der Lochblende (2), der Durchlassöffnung (8) gegenüberliegend, ein Auslasskanal (29) angeordnet ist.

15. Druckminderer nach einem der Ansprüche 1 bis 14, **dadurch gekennzeichnet, dass** der Kontrollkanal (43) vom Auslasskanal (29) abzweigt.

16. Druckminderer nach einem der Ansprüche 1 bis 15, **dadurch gekennzeichnet, dass** der Differenzkolben (34) unterschiedliche Durchmesserbereiche aufweist.

17. Druckminderer nach einem der Ansprüche 1 bis 16, **dadurch gekennzeichnet, dass** durch die Verlagerung des Differenzkolbens (34) entgegen der Federkraft (F) ein Schalter einer elektrischen oder mechanischen Anzeigeeinheit (55) betätigbar ist.

18. Druckminderer nach einem der Ansprüche 1 bis 17, **dadurch gekennzeichnet, dass** bei einer Verlagerung des Differenzkolbens durch die Federkraft (F) ein Schalter einer elektrischen oder mechanischen Anzeigeeinheit (55) betätigbar ist.

19. Druckminderer nach einem der Ansprüche 1 bis 18, **dadurch gekennzeichnet, dass** an der Anzeigeeinheit (55) mehrere Signale anzeigbar sind.

20. Druckminderer nach einem der Ansprüche 1 bis 19, **dadurch gekennzeichnet, dass** eine Energieversorgung der Anzeigeeinheit (55) durch eine austauschbare Batterie oder einem wieder aufladbaren Akkumulator erfolgt.

## Claims

1. Pressure reducer for gases, comprising a pressure regulator (58) and a downstream flow-volume control unit (3), the flow-volume control unit (3) being arranged between a low-pressure region (4) of the pressure regulator (58) and an outflow region (5), having the following features:
a) a display unit (55) for at least one signal is arranged on the housing (10) of the flow-volume control unit (3);
b) a perforated sheet (2) for controlling the flow volume can be actuated via an actuator (6) of the flow-volume control unit (3);
c) the perforated sheet (2) has outlet holes (27) having different diameters, which can be brought into overlap with an outlet opening (8) in a sealing disc (7) arranged in the low-pressure region (4), whereby a flow channel (S) can be released in the low-pressure region (4), which channel extends from the outlet opening (8) into a front region of a piston chamber (33), which region is arranged in the housing (10) of the flow-volume control unit (3);
and **characterised by** the following features:
d) a differential piston (34) is arranged in the piston chamber (33);
e) the differential piston (34) separates the front region (37) from a rear region (42) of the piston chamber (33) in a pressure-tight manner;
f) the rear region (42) is connected to the outflow region (5) via a control channel (43);
g) a spring force (F) acts on the differential piston (34) in the direction of the front region (37);
h) and a signal being able to be triggered by displacing the differential piston (34) against the spring force (F).

2. Pressure reducer according to claim 1, **characterised in that** the triggered signal is an optic and/or a haptic and/or an acoustic signal, and/or an electrical signal is provided for additional control functions.

3. Pressure reducer according to either claim 1 or claim 2, **characterised in that** the actuator (6) comprises a handle (54) and a shaft (18) which can be actuated via the handle (54).

4. Pressure reducer according to any of claims 1 to 3, **characterised in that** a perforated disc (17) is arranged on the end of the shaft (18) opposite the handle (54).

5. Pressure reducer according to claim 4, **characterised in that** the perforated sheet (2) is arranged on the shaft side of the perforated disc (17).

6. Pressure reducer according to any of claims 1 to 5, **characterised in that** the outlet holes (27) of the perforated sheet (2) are arranged concentrically with the holes (19) of the perforated disc (17).

7. Pressure reducer according to any of claims 1 to 6, **characterised in that** the perforated sheet (2) has ventilation holes (28) which are arranged in a ring and are offset from the outlet holes (27) in the circumferential direction by an angle (W).

8. Pressure reducer according to any of claims 1 to 7, **characterised in that** the ventilation holes (28) are radially inwardly and/or radially outwardly offset from the outlet holes (27).

9. Pressure reducer according to any of claims 1 to 8, **characterised in that** the perforated disc (17) has a circumferential groove (24) on a lateral face (23) pointing towards the perforated sheet (2).

10. Pressure reducer according to claim 9, **characterised in that** the holes (19) in the perforated disc (17) open into the groove (24).

11. Pressure reducer according to any of claims 1 to 10, **characterised in that** the groove (24) is at least as wide as the radial spacing between the inner or outer ventilation holes (28) and the outlet holes (27).

12. Pressure reducer according to any of claims 1 to 11, **characterised in that** the sealing disc (7) has a recess (31) on a lateral face (16) pointing towards the piston chamber (33), the recess (31) being able to be brought into alignment at least with two holes (19) in the perforated disc (17), and the recess (31) projecting in regions beyond the circumferential side (32) of the perforated disc (17), a fluid-conducting passage being located between the region of the recess (31) and the front region (37) of the piston chamber (33).

13. Pressure reducer according to any of claims 1 to 12, **characterised in that** the fluid-conducting passage is a component of the flow channel (S).

14. Pressure reducer according to any of claims 1 to 13, **characterised in that** an outlet channel (29) is arranged on the outflow side of the perforated sheet (2), opposite the outlet opening (8).

15. Pressure reducer according to any of claims 1 to 14, **characterised in that** the control channel (43) branches off from the outlet channel (29).

16. Pressure reducer according to any of claims 1 to 15, **characterised in that** the differential piston (34) has regions of different diameters.

17. Pressure reducer according to any of claims 1 to 16, **characterised in that** a switch of an electrical or mechanical display unit (55) can be actuated by displacing the differential piston (34) against the spring force (F).

18. Pressure reducer according to any of claims 1 to 17, **characterised in that** a switch of an electrical or mechanical display unit (55) can be actuated when displacing the differential piston by means of the spring force (F).

19. Pressure reducer according to any of claims 1 to 18, **characterised in that** a plurality of signals can be displayed on the display unit (55).

20. Pressure reducer according to any of claims 1 to 19, **characterised in that** energy is supplied to the display unit (55) by means of a replaceable battery or a rechargeable battery.

## Revendications

1. Réducteur de pression pour gaz comprenant un régulateur de pression (58) et une unité de commande de débit montée en aval (3), où l'unité de commande de débit (3) est disposée entre une zone basse pression (4) du régulateur de pression (58) et une zone d'évacuation (5), avec les caractéristiques suivantes :
a) une unité d'affichage (55) pour au moins un signal est disposée sur le boîtier (10) de l'unité de commande de débit (3) ;
b) un diaphragme à trou (2) peut être actionné pour la commande du débit par un organe de réglage (6) de l'unité de commande de débit (3) ;
c) le diaphragme à trou (2) présente des trous de sortie (27) avec différents diamètres qui peuvent être amenés en recouvrement avec une ouverture de passage (8) dans un joint plat (7) disposé dans la zone basse pression (4), un canal d'écoulement (S) pouvant être libéré dans la zone basse pression (4), lequel canal s'étend de l'ouverture de passage (8) jusque dans une zone avant disposée dans le boîtier (10) de l'unité de commande de débit (3) d'un espace de piston (33) ;
et **caractérisé par** les caractéristiques suivantes :
d) un piston différentiel (34) est disposé dans l'espace de piston (33) ;
e) le piston différentiel (34) sépare la zone avant (37) de manière étanche à la pression d'une zone arrière (42) de l'espace de piston (33);
f) la zone arrière (42) est reliée par un canal de contrôle (43) à la zone d'évacuation (5) ;
g) une force de ressort (F) agit en direction de la zone avant (37) sur le piston différentiel (34) ;
h) et où un signal peut être déclenché par déplacement du piston différentiel (34) à l'encontre de la force de ressort (F).

2. Réducteur de pression selon la revendication 1, **caractérisé en ce que** le signal déclenché est un signal optique et/ou haptique et/ou acoustique, et/ou un signal électrique est mis à disposition pour d'autres fonctions de commande et de contrôle.

3. Réducteur de pression selon la revendication 1 ou 2, **caractérisé en ce que** l'organe de réglage (6) présente une poignée (54) et une broche (18) actionnable par le biais de la poignée (54).

4. Réducteur de pression selon l'une quelconque des revendications 1 à 3, **caractérisé en ce qu'**un disque à trou (17) est disposé sur une extrémité de la broche (18) opposée à la poignée (54).

5. Réducteur de pression selon la revendication 4, **caractérisé en ce que** le diaphragme à trou (2) est disposé côté broche du disque à trou (17).

6. Réducteur de pression selon l'une quelconque des revendications 1 à 5, **caractérisé en ce que** les trous de sortie (27) du diaphragme à trou (2) sont disposés de manière concentrique les uns par rapport aux autres avec les trous (19) du disque à trou (17).

7. Réducteur de pression selon l'une quelconque des revendications 1 à 6, **caractérisé en ce que** le diaphragme à trou (2) présente des perçages de ventilation (28) disposés de manière annulaire, en déport d'un angle (W) par rapport aux trous de sortie (27) dans le sens périphérique.

8. Réducteur de pression selon l'une quelconque des revendications 1 à 7, **caractérisé en ce que** les perçages de ventilation (28) sont disposés en déport radialement vers l'intérieur et/ou radialement vers l'extérieur depuis les trous de sortie (27).

9. Réducteur de pression selon l'une quelconque des revendications 1 à 8, **caractérisé en ce que** le disque à trou (17) présente une rainure périphérique (24) sur une surface latérale (23) tournée vers le diaphragme à trou (2).

10. Réducteur de pression selon la revendication 9, **caractérisé en ce que** les trous (19) du disque à trou (17) débouchent dans la rainure (24).

11. Réducteur de pression selon l'une quelconque des revendications 1 à 10, **caractérisé en ce que** la rainure (24) est au moins aussi large que la distance radiale entre les perçages de ventilation (28) intérieurs ou extérieurs et les trous de sortie (27).

12. Réducteur de pression selon l'une quelconque des revendications 1 à 11, **caractérisé en ce que** le disque à trou (7) présente un évidement (31) sur une surface latérale (16) tournée en direction de l'espace de piston (33), où l'évidement (31) peut être amené en recouvrement au moins avec deux trous (19) du disque à trou (17) et où l'évidement (31) dépasse par endroits du côté périphérique (32) du disque à trou (17), où un passage guide de fluide se trouve entre la zone de l'évidement (31) et la zone avant (37) de l'espace de piston (33).

13. Réducteur de pression selon l'une quelconque des revendications 1 à 12, **caractérisé en ce que** le passage guide de fluide est un composant du canal d'écoulement (S).

14. Réducteur de pression selon l'une quelconque des revendications 1 à 13, **caractérisé en ce qu'**un canal de sortie (29) est disposé côté écoulement du diaphragme à trou (2), en regard de l'ouverture de passage (8).

15. Réducteur de pression selon l'une quelconque des revendications 1 à 14, **caractérisé en ce que** le canal de contrôle (43) diverge du canal de sortie (29).

16. Réducteur de pression selon l'une quelconque des revendications 1 à 15, **caractérisé en ce que** le piston différentiel (34) présente différentes gammes de diamètre.

17. Réducteur de pression selon l'une quelconque des revendications 1 à 16, **caractérisé en ce qu'**un commutateur d'une unité d'affichage (55) électrique ou mécanique peut être actionné par le déplacement du piston différentiel (34) à l'encontre de la force de ressort (F).

18. Réducteur de pression selon l'une quelconque des revendications 1 à 17, **caractérisé en ce qu'**un commutateur d'une unité d'affichage (55) électrique ou mécanique peut être actionné lors d'un déplacement du piston différentiel par la force de ressort (F).

19. Réducteur de pression selon l'une quelconque des revendications 1 à 18, **caractérisé en ce que** plusieurs signaux peuvent être affichés sur l'unité d'affichage (55).

20. Réducteur de pression selon l'une quelconque des revendications 1 à 19, **caractérisé en ce qu'**une alimentation en énergie de l'unité d'affichage (55) est assurée par une batterie interchangeable ou un accumulateur rechargeable.
